# EUROPÄISCHE PATENTSCHRIFT

(11) **EP 2 790 946 B1**
(45) Veröffentlichungstag und Bekanntmachung des Hinweises auf die Patenterteilung: **12.08.2015**
(21) Anmeldenummer: 12772989.5
(22) Anmeldetag: 19.10.2012
(51) Int. Cl.: B60K 26/02

(54) **VERFAHREN UND STEUERGERÄT ZUM STEUERN EINES HAPTISCHEN FAHRPEDALS EINES KRAFTFAHRZEUGS MIT EINER LAGEREGELUNG**
METHOD AND CONTROL DEVICE FOR CONTROLLING A HAPTIC ACCELERATOR PEDAL OF A MOTOR VEHICLE BY MEANS OF A POSITION CONTROL
PROCÉDÉ ET DISPOSITIF DE COMMANDE POUR COMMANDER UNE PÉDALE D'ACCÉLÉRATEUR HAPTIQUE D'UN VÉHICULE À MOTEUR AVEC RÉGULATION DE POSITION

(30) Priorität: 12.12.2011 DE 102011088277
(43) Veröffentlichungstag der Anmeldung: 22.10.2014
(73) Patentinhaber: Robert Bosch GmbH, 70442 Stuttgart (DE)
(72) Erfinder: WAGNER, Alexandre, 70435 Stuttgart (DE); SIEBER, Udo, 74321 Bietigheim (DE); HENNING, Daniel, 74372 Sersheim (DE)
(86) Internationale Anmeldenummer: PCT/EP2012/070719
(87) Internationale Veröffentlichungsnummer: WO 2013/087266

(56) Entgegenhaltungen:
- WO-A1-2010/130605
- DE-A1- 2 555 429
- DE-A1- 19 916 434
- DE-A1-102004 025 829
- DE-A1-102009 045 710

## Beschreibung

### Gebiet der Erfindung

Die vorliegende Erfindung betrifft ein Verfahren sowie ein Steuergerät zum Steuern eines haptischen Fahrpedals in einem Kraftfahrzeug. Die Erfindung betrifft ferner ein Computerprogrammprodukt, das beim Ausführen auf einem programmierbaren Steuergerät das erfindungsgemäße Verfahren ausführen soll, sowie ein computerlesbares Medium, auf dem ein solches Computerprogrammprodukt gespeichert ist.

### Stand der Technik

In modernen Kraftfahrzeugen wird der Fahrer durch eine Vielzahl von zur Verfügung gestellten Informationen beim Führen des Fahrzeugs unterstützt. Beispielsweise kann es hilfreich sein, dem Fahrer Rückmeldungen über bestimmte Fahrzustände oder Aufforderungen an den Fahrer, bestimmte Maßnahmen zu treffen, zu signalisieren, um die Sicherheit beim Fahren oder den Komfort des Fahrers erhöhen zu können oder um Treibstoff einsparen zu können. Diese Rückmeldungen können auf verschiedene Weise wie zum Beispiel optisch oder akustisch bereitgestellt werden.

In modernen Kraftfahrzeugen werden zusätzlich auch Möglichkeiten einer haptischen Rückmeldung an den Fahrer über das Fahrpedal des Fahrzeugs implementiert. Das Fahrpedal ist hierzu mit einem Aktuator ausgestattet, der es ermöglicht, das Fahrpedal gezielt mit einer Kraft zu beaufschlagen. Beispielsweise kann der Aktuator ab einer bestimmten Fahrpedallage einem weiteren Niederdrücken des Fahrpedals gezielt entgegenwirken, um einem Fahrer so beispielsweise zu signalisieren, dass ein stärkeres Niederdrücken des Fahrpedals zu einer überproportionalen Erhöhung des Kraftstoffverbrauchs führen würde.

Alternativ kann mit Hilfe des Aktuators eine zeitlich variierende Kraft auf das Fahrpedal ausgeübt werden, um dieses in Schwingungen zu versetzen, beispielsweise in Form von Vibrationen oder Pulsationen.

Auf diese Weise können dem Fahrer durch dessen haptische Wahrnehmung Hinweise und Warnungen mitgeteilt oder auch Komfortfunktionen bereitgestellt werden, ohne dass dieser durch optische oder akustische Signale beispielsweise vom Beobachten des Verkehrs abgelenkt würde.

DE 25 55 429 beschreibt ein System zur Erzeugung von taktilen bzw. haptisch wahrnehmbaren Signalen in einem Fahrzeug.

### Offenbarung der Erfindung

Die vorliegende Erfindung ermöglicht in ihren Ausführungsformen ein vorteilhaftes Ansteuern eines haptischen Fahrpedals in einem Kraftfahrzeug. Insbesondere kann die Erfindung ein kurzfristiges Erzeugen eines haptisch wahrnehmbaren Signals in dem Fahrpedal ermöglichen, wobei Einflüsse des Aktuators auf das Fahrpedal, die von einem Fahrer als störend wahrgenommen werden können, vermieden oder gering gehalten werden können.

Bei dem hier vorgeschlagenen Verfahren kann ein Pedalhebel des haptischen Fahrpedals innerhalb eines Verlagerungsbereichs entlang einer Betätigungsrichtung zwischen einer Ruheposition und einer maximal betätigten Position verlagert werden. Mittels eines Aktuators kann der Pedalhebel durch Ausüben einer Gegenkraft entgegen der Betätigungsrichtung zur Erzeugung eines haptisch wahrnehmbaren Signals angeregt werden. Das Verfahren zeichnet sich dadurch aus, dass eine aktuelle Position des Pedalhebels relativ zu einer aktuellen Position des Aktuators ermittelt wird und der Aktuator daraufhin derart geregelt wird, dass er einer Veränderung der ermittelten Position des Pedalhebels aktiv folgt.

Dem erfindungsgemäßen Verfahren zugrunde liegende Motivationen bzw. Ideen können unter anderem darin gesehen werden, das ein Aktuator eines haptischen Fahrpedals möglichst so angesteuert werden soll, dass er in Zeitphasen, zu denen kein haptisch wahrnehmbares Signal an dem Pedalhebel erzeugt werden soll, einen möglichst geringen Einfluss auf den Pedalhebel hat.

Es wird hierfür vorgeschlagen, den Aktuator nicht lediglich derart mit dem Pedalhebel des Fahrpedals zu koppeln, dass er beim Niederdrücken oder Loslassen des Pedalhebels durch den Fahrer dem Pedalhebel passiv folgt, beispielsweise aufgrund einer direkten mechanischen Kopplung des Aktuators mit dem Pedalhebel oder aufgrund von Federkräften, die den Aktuator in einer Wirkverbindung mit dem Pedalhebel halten. Stattdessen soll die Anordnung bzw. Positionierung des Aktuators gezielt geregelt werden, so dass der Aktuator einer Positionsveränderung des Pedalhebels aktiv folgt.

Zu diesem Zweck kann beispielsweise bei einem Aktuator, der mit Hilfe eines Elektromotors angetrieben wird, der Elektromotor über ein Steuergerät so angesteuert werden, dass er sich stets aktiv in die gleiche Richtung bewegt, wie sich der Pedalhebel aktuell aufgrund der Betätigung durch den Fahrer bewegt.

Einflüsse auf den Pedalhebel, die ansonsten von einem Fahrer als störend wahrgenommen werden könnten, können auf diese Weise vermieden oder zumindest verringert werden. Beispielsweise können Kräfte auf den Pedalhebel, die der Aktuator im unbestromten Zustand aufgrund seiner Trägheit oder Schwergängigkeit auf den Pedalhebel ausüben würde, durch die vorgeschlagene aktive Lageregelung reduziert werden. Auch eine zeitliche Variation eines Kräfteverlaufs, die ein Fahrer in Form einer gewissen Welligkeit im Pedalkraftverlauf spüren würde und die aus magnetischen Rastmomenten eines Elektromotors des Aktuators resultieren können, wenn dieser passiv verlagert würde, können reduziert werden.

Für die Lageregelung kann eine aktuelle Position des Pedalhebels über einen Pedalhebellagesensor ermittelt werden. Ergänzend oder alternativ kann eine aktuelle Position des Aktuators über einen Aktuatorlagesensor ermittelt werden. Signale des Pedalhebellagesensors können als Führungsgröße für die Lageregelung des Aktuators eingesetzt werden. Signale des Aktuatorlagesensors können als Regelgröße für die Lageregelung des Aktuators wirken.

Aufgrund einer solchen Lageregelung kann sich der Aktuator synchron mit dem Pedalhebel bewegen. Die Trägheit des Aktuators kann durch den Aktuator selbst beschleunigt werden, so dass keine oder geringe störende Rückstellkräfte bzw. Trägheitskräfte auf den Pedalhebel wirken.

Der Aktuator kann insbesondere derart geregelt werden, dass er einer Veränderung der ermittelten Position des Pedalhebels aktiv folgt, ohne dass dabei eine Kraft zwischen dem Aktuator und dem Pedalhebel ausgeübt wird.

Mit anderen Worten kann die Lagefolgeregelung des Aktuators derart ausgestaltet werden, dass der Aktuator außerhalb der Zeitphasen, in denen gezielt ein haptisch wahrnehmbares Signal erzeugt werden soll, keinerlei Kräfte auf den Pedalhebel überträgt. Hierdurch kann insbesondere auch eine Welligkeit im Pedalkraftverlauf durch magnetische Rastmomente des Aktuatormotors eliminiert werden.

Der Aktuator kann dabei derart geregelt werden, dass ein Offset zwischen einer virtuellen aktuellen Position des Aktuators, in der der Aktuator eine Wirkverbindung mit dem Pedalhebel eingehen würde, und einer tatsächlichen aktuellen Position des Aktuators innerhalb eines vorbestimmten Offset-Bereichs bleibt.

Mit anderen Worten können der Aktuator und der Pedalhebel so ausgebildet sein, dass eine mechanische Wirkverbindung zwischen dem Aktuator und dem Pedalhebel zeitweilig getrennt werden kann, das heißt, der Aktuator von dem Pedalhebel beabstandet und damit entkoppelt werden kann. Die Lageregelung des Aktuators kann dabei derart durchgeführt werden, dass ein Abstand oder "Offset" zwischen dem Pedalhebel und dem Aktuator, das heißt ein Abstand zwischen einer Position, in die der Aktuator verlagert werden müsste, um in Wirkverbindung mit dem Pedalelement zu treten, und einer tatsächlichen aktuellen Position, in einem vorbestimmten Offset-Bereich gehalten wird. Dadurch kann einerseits sichergestellt werden, dass ein gewisser MindestAbstand stets beibehalten wird und es außerhalb der Zeitphasen, in denen haptisch wahrnehmbare Signale gezielt erzeugt werden sollten, zu keiner Wirkverbindung und damit keiner störenden Kraftübertragung zwischen dem Aktuator und dem Pedalhebel kommt. Andererseits kann auch sichergestellt werden, dass sich der Aktuator nicht über ein bestimmtes Maximum hinaus von einer Position entfernt, in der er in Wirkverbindung mit dem Pedalhebel treten würde, so dass der Aktuator stets innerhalb kurzer Reaktionszeiten schnell in Wirkverbindung mit dem Pedalhebel gebracht werden kann.

Der Offset-Bereich kann dabei beispielsweise als Winkelbereich von zwischen einem und zehn Grad, vorzugsweise zwischen zwei und sechs Grad, definiert werden.

Der Winkelbereich kann dabei derart definiert sein, dass er, bezogen auf die aktuelle Aktuatorposition, einen Winkel angibt, um den der Pedalhebel an seiner aktuellen Position entlang der Betätigungsrichtung verlagert werden müsste, um in Wirkverbindung mit dem Aktuator zu treten.

Eine ausreichend große Untergrenze des Winkelbereichs kann dabei gewährleisten, dass der Lageregelung bei einem plötzlichen schnellen Niedertreten des Pedalhebels durch den Fahrer ausreichend Zeit bleibt, die Anordnung des Aktuators anzupassen. Eine Obergrenze des Winkelbereichs kann so gewählt sein, dass der Aktuator stets innerhalb ausreichend kurzer Reaktionszeit an den Pedalhebel herangebracht werden kann, um haptisch wahrnehmbare Signale zu erzeugen.

Das vorgeschlagene Verfahren zur Lageregelung des Aktuators kann weiter dadurch verbessert werden, dass Störeffekte, welche ein Streckenverhalten des Aktuators beeinflussen, durch eine ergänzende Ausregelung zumindest teilweise kompensiert werden.

Eine genaue Regelung der Positionierung des Aktuators erfordert im Allgemeinen eine genaue Kenntnis des Streckenverhaltens des Aktuators. Allerdings kann dieses Streckenverhalten durch Temperatureffekte, Alterungseffekte oder sonstige Effekte beeinflusst werden. Eine ergänzende Ausregelung kann solchen Störeinflüssen Rechnung tragen und diese zumindest teilweise kompensieren.

Während in Zeitphasen, in denen kein haptisch wahrnehmbares Signal erzeugt werden soll, der Aktuator durch eine Lageregelung derart geregelt wird, dass er einer Veränderung der ermittelten Position des Pedalhebels aktiv folgt, kann während einer Zeitphase, in der ein haptisch wahrnehmbares Signal erzeugt werden soll, der Aktuator durch eine Stromregelung geregelt werden. Die Stromregelung erfolgt dabei derart, dass durch Regeln eines vorbestimmten zeitlichen Verlaufs des an den Aktuator angelegten Stroms ein vorbestimmter Kraftverlauf eines haptisch wahrnehmbaren Signals an dem Pedalhebel bewirkt wird. Die in den verschiedenen Betriebsphasen genutzten unterschiedlichen Regelungsarten, d.h. Lageregelung, solange kein haptisch wahrnehmbares Signal erzeugt werden soll, und Stromregelung bei Erzeugung eines haptisch wahrnehmbaren Signals, ermöglichen eine optimale Anpassung der Pedalregelung an die verschiedenen Erfordernisse während der unterschiedlichen Betriebsphasen.

Die oben beschriebenen Ausführungsformen von erfindungsgemäßen Verfahren und die damit erreichbaren Funktionalitäten und Vorteile können durch ein in einem Fahrzeug vorgesehenes Steuergerät zum Steuern des Fahrpedals implementiert werden.

Das Steuergerät kann dabei dazu ausgelegt sein, über geeignete Schnittstellen beispielsweise Signale von einem Pedalhebellagesensor und einem Aktuatorlagesensor empfangen zu können und Steuersignale an den Aktuator des Fahrpedals zu senden zu können. Der allgemein verwendete Begriff "Steuergerät" soll dabei nicht ausschließen, dass nicht nur ein Steuern, sondern auch ein aktives Regeln des Aktuators durchgeführt werden kann. Insbesondere soll das Steuergerät in der Lage sein, außerhalb von Zeitphasen, in denen ein haptisch wahrnehmbares Signal an den Pedalhebel übertragen werden soll, die Positionierung des Aktuators aktiv so zu regeln, dass dieser einer Veränderung der Positionierung des Pedalhebels folgt.

Das Steuergerät kann einen Vorsteuerungsblock zur Erzeugung eines Stellsignals für einen Stellmotor des Aktuators aufweisen. Dieser Vorsteuerungsblock kann das Stellsignal, basierend auf einem Führungssignal von einem Pedalhebellagesensor, erzeugen.

Bei entsprechender Auslegung des Vorsteuerungsblocks und einer an das Stellvermögen des Stellmotors angepassten Dynamik des Führungssignals kann dabei allein durch die Vorsteuerung eine Regelgröße der Aktuatorposition genau dem vorgegebenen Führungssignal folgen.

Um Einflüsse auf ein Streckenverhalten des Aktuators, beispielsweise aufgrund von Temperatureffekten oder Alterungseffekten, und damit verbundene Störeinflüsse auf das Stellsignal für den Stellmotor des Aktuators minimieren zu können, kann das Steuergerät ferner einen Regler zur Ausregelung solcher Störeffekte aufweisen.

Das Steuergerät kann das vorgeschlagene Steuerverfahren sowie etwaige Informationsauswertungen von Sensorsignalen in Hardware und/oder in Software implementieren. Es kann vorteilhaft sein, ein programmierbares Steuergerät für die Ausführung des oben beschriebenen Verfahrens zu programmieren. Hierzu kann ein Computerprogrammprodukt computerlesbare Anweisungen aufweisen, die das programmierbare Steuergerät dazu anweisen, die Schritte des jeweiligen Verfahrens durchzuführen. Das Computerprogrammprodukt kann auf einem computerlesbaren Medium wie beispielsweise einer CD, einer DVD, einem Flashspeicher, einem ROM, einem EPROM oder ähnlichem gespeichert sein. Um die von dem Aktuator einzunehmende Anordnung korrekt ansteuern zu können, kann neben der Verarbeitung weiterer Sensordaten auch in einer Datenbank oder in Form von Kennlinien gespeicherte Information über ein von dem Aktuator durchgeführtes Reaktionsverhalten auf bestimmte Steuerungssignale oder ein Streckenverhalten des Aktuators herangezogen werden.

Es wird angemerkt, dass mögliche Merkmale und Vorteile von Ausführungsformen der Erfindung hierin teilweise mit Bezug auf ein erfindungsgemäßes Verfahren und teilweise mit Bezug auf ein erfindungsgemäßes Steuergerät beschrieben sind. Ein Fachmann wird erkennen, dass die einzelnen Merkmale in geeigneter Weise miteinander kombiniert oder ausgetauscht werden können, insbesondere von dem Steuergerät auf das Verfahren und umgekehrt übertragen werden können, um auf diese Weise zu weiteren Ausführungsformen und möglicherweise Synergieeffekten gelangen zu können.

### Kurze Beschreibung der Zeichnungen

Nachfolgend werden Ausführungsformen der Erfindung mit Bezug auf die beigefügten Zeichnungen beschrieben. Weder die Beschreibung noch die Zeichnungen sollen dabei als die Erfindung einschränkend ausgelegt werden.
- Figur 1: zeigt ein Kraftfahrzeug mit einem Steuergerät zum Ausführen eines Verfahrens gemäß einer Ausführungsform der vorliegenden Erfindung;
- Figur 2: zeigt ein haptisches Fahrpedal mit einem Steuergerät gemäß einer Ausführungsform der vorliegenden Erfindung;
- Figur 3: zeigt eine Ausgestaltung einer Lageregelung für ein Steuergerät gemäß einer Ausführungsform der vorliegenden Erfindung.

Die Figuren sind lediglich schematisch und nicht maßstabsgetreu.

### Ausführungsformen der Erfindung

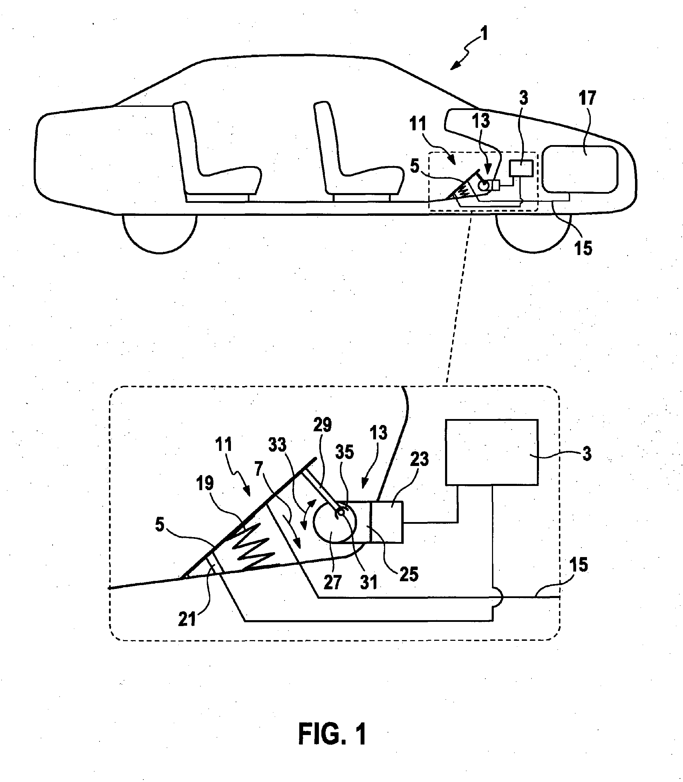

Figur 1 zeigt eine Schnittansicht eines Fahrzeugs 1 mit einem haptischen Fahrpedal 11. Durch Niederdrücken des Pedalhebels 5 kann ein Fahrer einen Motor 17 des Fahrzeugs 1 über einen Seilzug 15 oder eine mit einem Motorsteuergerät verbundene Leitung (nicht dargestellt) zum Beschleunigen des Fahrzeugs veranlassen. Der Fahrer muss hierzu den Pedalhebel 5 in einer Betätigungsrichtung des Pfeils 7 niederdrücken, wodurch sich der Pedalhebel 5, ausgehend von einer Ruheposition entlang eines Verlagerungsbereichs hin zu einer maximal betätigten Position, verlagern lässt. Ein Pedalhebellagesensor 21 kann dabei die aktuelle Position bzw. Lage des Pedalhebels 5 bestimmen. Eine Feder 19 spannt den Pedalhebel 5 entgegen der Betätigungsrichtung 7 hin zu der Ruheposition vor.

Das Fahrpedal 11 ist als haptisches Fahrpedal ausgestaltet. Hierzu verfügt das Fahrpedal 11 über einen Aktuator 13, mit Hilfe dessen der Pedalhebel 5 in eine gewünschte Richtung entgegen der Betätigungsrichtung 7 bewegt bzw. in diese mit Kraft beaufschlagt werden kann. Der Aktuator 13 kann hierbei den Pedalhebel 5 zu Schwingungen anregen, beispielsweise in Form von Vibrationen oder Pulsationen. Alternativ kann der Aktuator 13 eine Kraft auf den Pedalhebel 5 ausüben, die ein weiteres Niederdrücken des Pedalhebels 5 erschweren kann und somit von einem Fahrer als Druckpunkt beim Betätigen des Pedalhebels 5 wahrgenommen werden kann.

Der Aktuator 13 kann mit einem Gleichstrommotor 23 betrieben werden, der über ein Getriebe 25 mit einer Betätigungsscheibe 27 gekoppelt ist. Durch Betätigen des Motors 23 kann die Betätigungsscheibe 27, wie durch den Pfeil 33 angedeutet, im oder gegen den Uhrzeigersinn verdreht werden. An der Betätigungsscheibe 27 ist in einem außerzentrischen Bereich ein Nocken 31 vorgesehen. Dieser Nocken 31 kann mit einem an dem Pedalhebel 5 vorgesehenen Stößel 29 zusammenwirken. Hierzu weist der Stößel 29 an seinem zu dem Aktuator 13 gerichteten Ende eine gabelförmige Aufnahme 35 auf, in die der Nocken 31 eingreifen kann, sobald die Betätigungsscheibe 27 in eine entsprechende Position gedreht wurde.

Alternativ kann der Aktuator auch als Direktantrieb beispielsweise mit einem Torquer-Motor ausgestaltet sein, wodurch hohe Kräfte auch ohne ein Getriebe erzeugt werden können.

Der Aktuator 13 wird von einem Steuergerät 3 angesteuert. Das Steuergerät 3 erkennt, wenn einem Fahrer über den Pedalhebel 5 ein haptisch wahrnehmbares Signal übermittelt werden soll, um ihn beispielsweise auf die Möglichkeit einer kraftstoffsparenden Fahrweise oder eine Gefahrensituation hinzuweisen. Das Steuergerät steuert daraufhin den Aktuator derart an, dass eine konstante oder zeitlich variierende Kraft entgegen der Betätigungsrichtung 7 auf den Pedalhebel 5 ausgeübt wird.

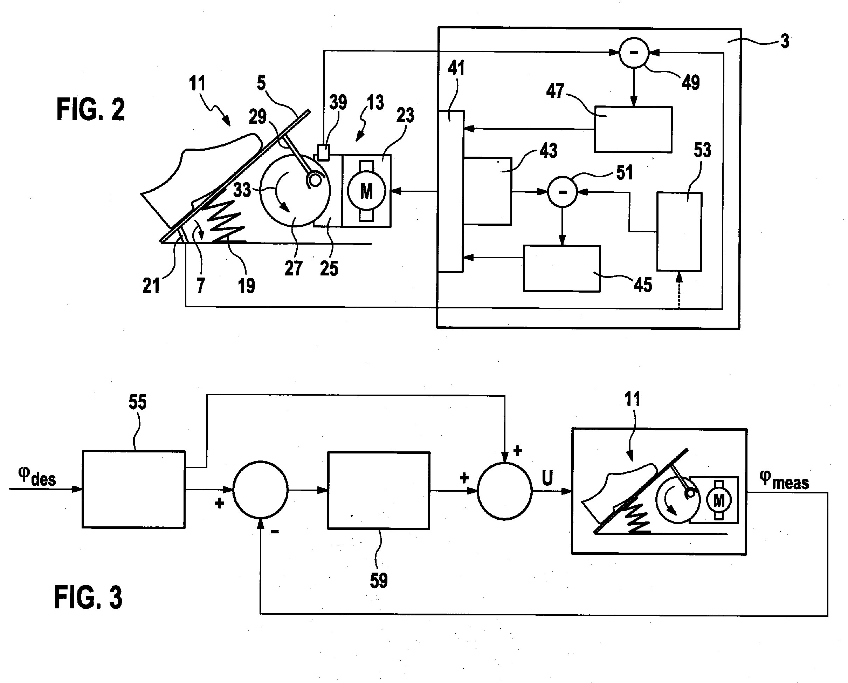

Figur 2 veranschaulicht eine Ansteuerung des Fahrpedals 11, um außerhalb von Signalphasen, wenn kein haptisch wahrnehmbares Signal erzeugt werden soll, den Aktuator 3 derart zu regeln, dass er der aktuellen Position des Pedalhebels 5 folgt.

Sowohl Signale von dem Pedalhebellagesensor 21 als auch Signale von einem Aktuatorlagesensor 39 werden an das Steuergerät 3 übermittelt. Beide Sensoren 21, 39 können dabei als Lagesensor oder Winkelsensor ausgebildet sein.

Das Signal des Pedalhebellagesensors 21 wird als Führungsgröße an einem in dem Steuergerät 3 vorgesehenen Lageregelkreis des Aktuators aufgeschaltet. Regelgröße dieses Kreises ist das Signal des Aktuatorlagesensors 39. Im einfachsten Fall wird aus der Führungsgröße und der Regelgröße die Regeldifferenz 49 gebildet und auf den Lageregler 47 geschaltet. Dieser bildet eine geeignete Stellgröße für den Aktuatormotor 23. Diese Stellgröße wird über eine Endstufe 41 verstärkt auf den Motor 23 des Aktuators 3 geleitet, solange der Lageregelkreis aktiviert ist. Dieser Aktivierungszustand ist dabei der Normalfall, solange kein haptisch wahrnehmbares Signal erzeugt werden soll. Der Stromsensor 43 kann zusätzlich mit in den Lageregelkreis einbezogen werden (nicht gezeichnet). Dabei wird in Form eines unterlagerten Regelkreises oder einer Kaskadenregelung die Eigenschaften des Lagekreises hinsichtlich seinem zeitlichen Regelverhalten und seiner Robustheit gegenüber Störungen weiter verbessert.

Soll ein haptisch wahrnehmbares Signal kurzzeitig erzeugt werden, zum Beispiel als Kurvenwarnung oder als Signal zur Kraftstoffverbrauchsreduzierung, wird der Lageregelkreis temporär deaktiviert und eine Stromregelung aktiviert. Hierbei regelt ein geeigneter Stromregler 45 in Abhängigkeit eines gewünschten Sollstromes den Stellstrom des Aktuatormotors 23. Ist die Stromregelung aktiv, dann wird über die Endstufe 41 das Ausgangssignal des Stromreglers 45 über die Endstufe verstärkt an den Motor 23 geleitet. Der Sollstrom wird in einem speziellen Modul (53) generiert. Dort sind im Allgemeinen mehrere Kraftverläufe abgelegt, die je nach Fahrsituation aktiviert werden können. Ein Kraftverlauf wird mittels Strom-Momentenkonstante des Stellmotors und einer vorhandenen Übersetzung zwischen Stellmotor und Pedalachse in den auszugebenden Sollstrom transformiert. Nach Ausgabe des Kraftverlaufs, d.h. am Verlaufs- oder Zeitende, wird der Stromregelkreis deaktiviert und der Lageregelkreis erneut aktiviert.

Um eine Kraftübertragung zwischen dem Aktuator 3 und dem Pedalhebel 5 gänzlich zu unterbinden, kann dem durch den Pedalhebellagesensor 21 gemessenen Pedalwinkel ein geeigneter fester Offset, zum Beispiel im Bereich von zwei Grad bis sechs Grad, ständig aufgeschaltet werden. Eine solche Offsetbehaftete Größe kann dann als Führungsgröße für den Aktuator-Lageregelkreis verwendet werden.

Figur 3 zeigt eine mögliche Erweiterung der in Figur 2 dargestellten Lagereglerstruktur. Eine anliegende Führungsgröße ϕ_{des} wird durch einen geeigneten Vorsteuerungsblock 55 in ein Stellsignal für den Stellmotor 23 umgesetzt. Bei entsprechender Auslegung des Vorsteuerungsblocks 55 und einer an das Stellvermögen des Stellmotors 23 angepasste Dynamik des Führungssignals kann allein durch die Vorsteuerung die Regelgröße ϕₘₑₐₛ eine Aktuatorposition dem vorgegebenen Führungssignal genau folgen.

Ein solcher Idealzustand setzt jedoch eine genaue Kenntnis des Streckenverhaltens des Aktuators 13 voraus. Aufgrund von Temperatur-, Alterungs- und/oder sonstige Effekten ist dieser Idealzustand kaum realisierbar. Es wird daher zusätzlich ein Regler 59 vorgesehen, dessen Aufgabe sich auf eine Ausregelung solcher Störeffekte richtet.

## Patentansprüche

1. Verfahren zum Steuern eines haptischen Fahrpedals (11) in einem Kraftfahrzeug (1), wobei ein Pedalhebel (5) des Fahrpedals (11) innerhalb eines Verlagerungsbereichs entlang einer Betätigungsrichtung (7) zwischen einer Ruheposition und einer maximal betätigten Position verlagerbar ist und mittels eines Aktuators (13) durch Ausüben einer Gegenkraft entgegen der Betätigungsrichtung (7) zur Erzeugung eines haptisch wahrnehmbaren Signals angeregt werden kann,
**dadurch gekennzeichnet, dass** das Verfahren die folgenden Schritte aufweist:
Ermitteln einer aktuellen Position des Pedalhebels (5) relativ zu einer aktuellen Position des Aktuators (13), und
Regeln des Aktuators (13) derart, dass er einer Veränderung der ermittelten Position des Pedalhebels (5) aktiv folgt.

2. Verfahren nach Anspruch 1, wobei die aktuelle Position des Pedalhebels (5) über einen Pedalhebellagesensor (21) ermittelt wird und wobei Signale des Pedalhebellagesensors (21) als Führungsgröße für eine Lageregelung des Aktuators (13) eingesetzt werden.

3. Verfahren nach Anspruch 1 oder 2, wobei die aktuelle Position des Aktuators (13) über einen Aktuatorlagesensor (39) ermittelt wird und Signale des Aktuatorlagesensors (39) als Regelgröße für die Lageregelung des Aktuators (13) eingesetzt werden.

4. Verfahren nach Anspruch 1, 2 oder 3, wobei der Aktuator (13) derart geregelt wird, dass er einer Veränderung der ermittelten Position des Pedalhebels (5) aktiv folgt, ohne dass eine Kraft zwischen dem Aktuator (13) und dem Pedalhebel (5) ausgeübt wird.

5. Verfahren nach einem der Ansprüche 1 bis 4, wobei der Aktuator (13) derart geregelt wird, dass ein Offset zwischen einer virtuellen aktuellen Position des Aktuators (13), in der der Aktuator (13) eine Wirkverbindung mit dem Pedalhebel (5) eingehen würde, und einer tatsächlichen aktuellen Position des Aktuators (13) innerhalb eines vorbestimmten Offset-Bereichs bleibt.

6. Verfahren nach Anspruch 5, wobei der Offset-Bereich ein Winkelbereich von 1 bis 10° ist.

7. Verfahren nach einem der Ansprüche 1 bis 6, wobei ferner Störeffekte, welche ein Streckenverhalten des Aktuators (13) beeinflussen, durch eine ergänzende Ausregelung (59) zumindest teilweise kompensiert werden.

8. Verfahren nach einem der Ansprüche 1 bis 7, wobei während einer Zeitphase, in der kein haptisch wahrnehmbares Signal erzeugt werden soll, der Aktuator (13) durch eine Lageregelung derart geregelt wird, dass er einer Veränderung der ermittelten Position des Pedalhebels (5) aktiv folgt.

9. Verfahren nach einem der Ansprüche 1 bis 8, wobei während einer Zeitphase, in der ein haptisch wahrnehmbares Signal erzeugt werden soll, der Aktuator (13) durch eine Stromregelung derart geregelt wird, dass durch Regeln eines vorbestimmten zeitlichen Verlaufs des an den Aktuator angelegten Stroms ein vorbestimmter Kraftverlauf eines haptisch wahrnehmbaren Signals an dem Pedalhebel bewirkt wird.

10. Steuergerät (3) zum Steuern eines haptischen Fahrpedals (11) in einem Kraftfahrzeug (1), wobei das Steuergerät (3) dazu ausgelegt ist, ein Verfahren gemäß einem der Ansprüche 1 bis 9 durchzuführen.

11. Steuergerät (3) nach Anspruch 10, aufweisend einen Vorsteuerungsblock (55) zur Erzeugung eines Stellsignals für einen Stellmotor (23) eines Aktuators (13) des Fahrpedals (11), wobei der Vorsteuerungsblock (55) das Stellsignal basierend auf einem Führungssignal von einem Pedalhebellagesensor (21) erzeugt.

12. Steuergerät (3) nach Anspruch 11, ferner aufweisend einen Regler (59) zur Ausregelung von Störeffekten in dem Stellsignal, welche durch Einflüsse auf ein Streckenverhalten des Aktuators (13) begründet sind.

13. Computerprogrammprodukt, welches computerlesbare Anweisungen aufweist, die ein programmierbares Steuergerät (3) dazu anweisen, ein Verfahren gemäß einem der Ansprüche 1 bis 9 durchzuführen.

14. Computerlesbares Medium mit einem darauf gespeicherten Computerprogrammprodukt gemäß Anspruch 13.

## Claims

1. Method for controlling a haptic accelerator pedal (11) in a motor vehicle (1), wherein a pedal lever (5) of the accelerator pedal (11) can be moved between an inoperative position and a position in which it is operated to the maximum extent along an operating direction (7) within a movement range and can be excited in order to generate a haptically perceivable signal by exerting an opposing force counter to the operating direction (7) by means of an actuator (13), **characterized in that** the method comprises the following steps:
determining a current position of the pedal lever (5) relative to a current position of the actuator (13), and
controlling the actuator (13) in such a way that said actuator actively follows a change in the determined position of the pedal lever (5).

2. Method according to Claim 1, wherein the current position of the pedal lever (5) is determined by means of a pedal lever position sensor (21), and wherein signals from the pedal lever position sensor (21) are used as a guide variable for controlling the position of the actuator (13).

3. Method according to Claim 1 or 2, wherein the current position of the actuator (13) is determined by means of an actuator position sensor (39) and signals from the actuator position sensor (39) are used as a control variable for controlling the position of the actuator (13).

4. Method according to Claim 1, 2 or 3, wherein the actuator (13) is controlled in such a way that said actuator actively follows a change in the determined position of the pedal lever (5), without a force being exerted between the actuator (13) and the pedal lever (5).

5. Method according to one of Claims 1 to 4, wherein the actuator (13) is controlled in such a way that an offset between a virtual current position of the actuator (13), in which position the actuator (13) would establish an operative connection with the pedal lever (5), and an actual current position of the actuator (13) remains within a predetermined offset range.

6. Method according to Claim 5, wherein the offset range is an angular range of from 1 to 10°.

7. Method according to one of Claims 1 to 6, wherein other disturbing effects, which influence a system response of the actuator (13), are at least partially compensated by a supplementary correction means (59).

8. Method according to one of Claims 1 to 7, wherein, during a time phase in which no haptically perceivable signal is intended to be generated, the actuator (13) is controlled by a position control means in such a way that said actuator actively follows a change in the determined position of the pedal lever (5).

9. Method according to one of Claims 1 to 8, wherein, during a time phase in which a haptically perceivable signal is intended to be generated, the actuator (13) is controlled by a current control means in such a way that a predetermined force profile of a haptically perceivable signal acts on the pedal lever by virtue of a predetermined time profile of the current which is applied to the actuator being controlled.

10. Control device (3) for controlling a haptic accelerator pedal (11) in a motor vehicle (1), wherein the control device (3) is designed to carry out a method according to one of Claims 1 to 9.

11. Control device (3) according to Claim 10, having a pilot control block (55) for generating an actuating signal for an actuating motor (23) of an actuator (13) of the accelerator pedal (11), wherein the pilot control block (55) generates the actuating signal on the basis of a guide signal from a pedal lever position sensor (21).

12. Control device (3) according to Claim 11, further having a controller (59) for correcting disturbing effects in the actuating signal which arise due to influences on a system response of the actuator (13).

13. Computer program product which has computer-readable instructions which instruct a programmable control device (3) to carry out a method according to one of Claims 1 to 9.

14. Computer-readable medium having a computer program product according to Claim 13 stored in it.

## Revendications

1. Procédé de commande d'une pédale d'accélérateur haptique (11) dans un véhicule à moteur (1), un levier de pédale (5) de la pédale d'accélérateur (11) pouvant être déplacé dans une plage de déplacement, le long d'une direction d'actionnement (7), entre une position de repos et une position actionnée au maximum et pouvant être excité à l'aide d'un actionneur (13) par application d'une contre-force allant à l'encontre de la direction d'actionnement (7) pour produire un signal perceptible haptiquement ;
**caractérisé en ce que** le procédé comporte les étapes suivantes :
détermination d'une position actuelle du levier de pédale (5) par rapport à une position actuelle de l'actionneur (13) ; et
réglage de l'actionneur (13) de façon à lui faire suivre activement une variation de la position déterminée du levier de pédale (5).

2. Procédé selon la revendication 1, la position actuelle du levier de pédale (5) étant déterminée via un capteur de position de levier de pédale (21) et les signaux du capteur de position de levier de pédale (21) servant de grandeur de guidage pour régler la position de l'actionneur (13).

3. Procédé selon la revendication 1 ou 2, la position actuelle de l'actionneur (13) étant calculée via un capteur de position d'actionneur (39) et les signaux du capteur de position d'actionneur (39) servant de grandeur de réglage pour régler la position de l'actionneur (13).

4. Procédé selon la revendication 1, 2 ou 3, l'actionneur (13) étant réglé de façon à suivre activement une variation de la position déterminée du levier de pédale (5) sans exercer une force entre l'actionneur (13) et le levier de pédale (5).

5. Procédé selon l'une quelconque des revendications 1 à 4, l'actionneur (13) étant réglé de telle sorte qu'un décalage entre une position actuelle virtuelle de l'actionneur (13) dans laquelle l'actionneur (13) entrerait en liaison active avec le levier de pédale (5) et une position actuelle effective de l'actionneur (13) reste à l'intérieur d'une plage de décalage prédéfinie.

6. Procédé selon la revendication 5, la plage de décalage étant une plage angulaire de 1 à 10°.

7. Procédé selon l'une quelconque des revendications 1 à 6, les effets perturbateurs influençant un comportement de trajet de l'actionneur (13) étant en outre au moins en partie compensés par une régulation (59) complémentaire.

8. Procédé selon l'une quelconque des revendications 1 à 7, l'actionneur (13) étant réglé de telle sorte par une régulation de position pendant une phase temporelle pendant laquelle aucun signal perceptible haptiquement ne doit être produit qu'il suit activement une variation de la position déterminée du levier de pédale (5).

9. Procédé selon l'une quelconque des revendications 1 à 8, l'actionneur (13) étant réglé de telle sorte par un réglage du courant pendant une phase temporelle pendant laquelle un signal perceptible haptiquement doit être produit qu'une courbe de force prédéfinie d'un signal perceptible haptiquement est appliquée au levier de pédale par réglage d'une courbe dans le temps prédéfinie du courant appliqué à l'actionneur.

10. Appareil de commande (3) pour commander une pédale d'accélérateur haptique (11) dans un véhicule à moteur (1), l'appareil de commande (3) étant conçu pour mettre en oeuvre un procédé selon l'une quelconque des revendications 1 à 9.

11. Appareil de commande (3) selon la revendication 10, comportant un bloc de précommande (55) pour produire un signal de réglage pour un servomoteur (23) d'un actionneur (13) de la pédale d'accélérateur (11), le bloc de précommande (55) produisant le signal de réglage sur la base d'un signal de guidage provenant d'un capteur de levier de pédale (21).

12. Appareil de commande (3) selon la revendication 11, comportant en outre un régulateur (59) pour réguler les effets perturbateurs contenus dans le signal de réglage sur la base des influences agissant sur un comportement de trajet de l'actionneur (13).

13. Produit de programme informatique comportant des indications lisibles par ordinateur commandant un appareil de commande (3) programmable pour mettre en oeuvre un procédé selon l'une quelconque des revendications 1 à 9.

14. Support lisible par ordinateur avec un produit de programme informatique selon la revendication 13 mémorisé dessus.
